# FASCICULE DE BREVET EUROPEEN

(11) **EP 2 936 087 B1**
(45) Date de publication et mention de la délivrance du brevet: **08.03.2017**
(21) Numéro de dépôt: 13814969.5
(22) Date de dépôt: 23.12.2013
(51) Int. Cl.: G01G 21/23, G01G 19/08

(54) **MÉCANISME DE PESÉE POUR UNE NACELLE ET NACELLE ÉLÉVATRICE COMPRENANT UN TEL MÉCANISME DE PESÉE**
WÄGEVORRICHTUNG FÜR EINE ARBEITSBÜHNE UND HUBARBEITSBÜHNE MIT BESAGTER WÄGEVORRICHTUNG
WEIGHING MECHANISM FOR A LIFT AND AERIAL LIFT COMPRISING SAID WEIGHING MECHANISM

(30) Priorité: 24.12.2012 FR 1262756
(43) Date de publication de la demande: 28.10.2015
(73) Titulaire: Haulotte Group, 42152 L'Horme (FR)
(72) Inventeur: PAROT, Sébastien, F-42800 Saint Martin La Plaine (FR); COUZON, Catherine, F-42170 Saint Just Saint Rambert (FR)
(74) Mandataire: Lavoix
(86) Numéro de dépôt international: PCT/EP2013/077903
(87) Numéro de publication internationale: WO 2014/102240

(56) Documents cités:
- WO-A1-2006/113779
- DE-A1-102005 022 607
- DE-U1- 20 210 958
- Anonymous: "Single/Multi Point Beam Load Cells", A & D , 23 février 2006 (2006-02-23), XP002700411, Extrait de l'Internet: URL:http://www.andweighing.com.au/wp-conte nt/uploads/brochures/loadcells/LC-4204.pdf [extrait le 2013-07-08]

## Description

L'invention a trait à un mécanisme de pesée pour nacelle élévatrice, ainsi qu'à une nacelle élévatrice équipée d'un tel mécanisme.

Dans le domaine du levage de charges ou de personnes il est connu et obligatoire en Europe d'utiliser un contrôleur de charge pour bloquer le fonctionnement d'un système de levage en cas de surcharge. La précision exigée est inférieure ou égale à 20%. Cette valeur semble assez facile à obtenir mais ne l'est pas en réalité. Un enjeu persistant dans le domaine du levage de charges reste donc la précision de la mesure des efforts verticaux appliqués aux extrémités d'une structure.

Pour pallier ce problème, il est connu, par exemple de EP-A-1 630 124, de monter la plateforme d'une nacelle sur un parallélogramme déformable auquel est associé un système de ressort et de contacteur permettant de détecter une surcharge. Il s'agit d'un système à deux états qui ne permet pas une mesure proportionnelle du poids. De plus il présente un risque de grippage, ce qui implique un entretien régulier.

Il est aussi connu de mesurer le poids à partir d'un vérin placé à la verticale entre le bras et le châssis d'une nacelle. Le poids est calculé à partir de la mesure de la pression, de l'angle entre le bras et le châssis et de la longueur de la flèche. Ce mécanisme de pesée donne une mesure sensible à la température, au type de joints utilisés et au réglage de la machine. De plus, un contrôle et un étalonnage réguliers sont nécessaires.

Il est par ailleurs connu d'utiliser un capteur à jauge de déformation fixé sur un bras lié à la plateforme d'une nacelle. Le type de mesure donné dans ce cas est très sensible à la qualité d'assemblage entre le capteur et le bras.

Il est aussi connu de EP-A-1 382 562 ou DE-U-202 10 958 d'utiliser un mécanisme de pesée faisant le lien entre, d'un côté, le bras d'une nacelle et, de l'autre, la plateforme de la nacelle en étant fixé par des vis qui travaillent en cisaillement. La mesure est sensible au couple de serrage des vis et il existe un risque de déformation plastique du capteur. La qualité de la mesure dépend de la qualité de l'assemblage.

C'est à ces inconvénients qu'entend plus particulièrement remédier l'invention en proposant un mécanisme de pesée peu sensible à la qualité de l'assemblage, ne requérant pas de contrôle précis d'un couple de serrage, et dont la tenue mécanique ne dépend pas d'efforts de cisaillement sur des éléments vissés.

A cet effet l'invention concerne un mécanisme de pesée pour une nacelle élévatrice qui comprend un mât et une plateforme de support de charges ou de personnes, ce mécanisme de pesée comprenant une cellule de mesure d'efforts intercalée entre le mât et la plateforme, au moins une première plaque solidaire d'un premier support supporté par le mât et définissant une première surface d'appui de la cellule, cette plaque étant pourvue d'au moins un premier orifice traversant, au moins une deuxième plaque solidaire d'un deuxième support supportant la plateforme et définissant une deuxième surface d'appui de la cellule, cette plaque étant pourvue d'au moins un deuxième orifice traversant, au moins un premier pion et au moins un deuxième pion. Conformément à l'invention, la cellule est pourvue d'au moins un premier logement traversant aligné avec le premier orifice, et d'au moins un deuxième logement traversant aligné avec le deuxième orifice, en configuration montée du mécanisme, alors qu'en configuration montée du mécanisme, le premier pion est inséré dans le premier logement et dans le premier orifice et le deuxième pion est inséré dans le deuxième logement et dans le deuxième orifice et tandis qu'en configuration nominale d'utilisation du mécanisme, chaque pion s'étend selon une direction parallèle au poids d'une masse supportée par la plateforme.

Grâce à l'invention, la présence de la cellule en appui sur les surfaces des plaques et de pions qui traversent la cellule, permet de faire travailler la cellule dans de bonnes conditions, sans risque de déformation plastique et sans nécessité de faire travailler des pièces de fixation en cisaillement. Ainsi, le positionnement vertical des pions à travers les logements et les orifices traversants permet d'améliorer la qualité de la mesure d'une charge positionnée sur la plateforme.

Selon des aspects avantageux mais non obligatoires de l'invention, un tel mécanisme de pesée peut incorporer une ou plusieurs des caractéristiques suivantes, prises dans toute combinaison techniquement admissible :
- La première plaque et la deuxième plaque sont pourvues chacune de deux orifices traversants, le mécanisme comprend un troisième pion et un quatrième pion, alors que la cellule est pourvue de deux premiers logements traversants respectivement alignés avec les deux orifices de la première plaque et de deux deuxièmes logements traversants respectivement alignés avec les deux orifices de la deuxième plaque, en configuration montée du mécanisme, et alors que les premier et troisième pions sont insérés dans les deux premiers logements de la cellule et dans les deux orifices de la première plaque et les deuxième et quatrième pions sont insérés dans les deux deuxièmes logements de la cellule et dans les deux orifices de la deuxième plaque, en configuration montée du mécanisme.
- Le mécanisme comprend une troisième plaque solidaire du premier support et définissant une troisième surface d'appui de la cellule, cette plaque étant parallèle à la première plaque et définissant avec la première plaque et le premier support un premier volume dans lequel une partie de la cellule peut être insérée, cette troisième plaque étant pourvue d'au moins un troisième orifice traversant, ainsi qu'une quatrième plaque solidaire du deuxième support et définissant une quatrième surface d'appui de la cellule, cette plaque étant parallèle à la deuxième plaque et définissant, avec la deuxième plaque et le deuxième support, un deuxième volume dans lequel peut être insérée une partie de la cellule, cette quatrième plaque étant pourvue d'au moins un quatrième orifice traversant, alors que le premier logement traversant est aligné avec le troisième orifice et le deuxième logement traversant est aligné avec le quatrième orifice, en configuration montée du mécanisme, et alors que le premier pion est inséré dans le troisième orifice et le deuxième pion est inséré dans le quatrième orifice, en configuration montée du mécanisme.
- La troisième plaque et la quatrième plaque sont chacune pourvues de deux orifices traversants, alors que les deux premiers logements de la cellule sont alignés avec les deux orifices de la troisième plaque et les deux deuxièmes logements de la cellule sont alignés avec les deux orifices de la quatrième plaque en configuration montée du mécanisme et alors que les premier et troisième pions sont insérés dans les deux orifices de la troisième plaque et les deuxième et quatrième pions sont insérés dans les deux orifices de la quatrième plaque en configuration montée du mécanisme.
- Un pion est immobilisé par rapport à une plaque dont il traverse l'orifice au moyen d'une liaison vissée.
- Un taraudage est ménagé dans une plaque au voisinage de son orifice traversant et le pion est équipé d'un organe d'arrêt en translation axiale apte à être vissé dans le taraudage de la plaque. Cet organe d'arrêt comprend avantageusement une vis montée sur une patte solidaire du pion et qui s'étend radialement par rapport à un axe central et longitudinal du pion.
- Un pion est pourvu d'au moins un filetage terminal sur lequel est serré un écrou à l'opposé de la cellule par rapport à la plaque adjacente, en configuration montée du mécanisme.
- La cellule de mesure d'efforts comprend un capteur à jauge de déformation.

L'invention concerne également une nacelle élévatrice comprenant un châssis équipé de moyens de déplacement sur la surface du sol, une plateforme de support de charges ou de personnes, un mât et des moyens d'élévation de la plateforme par rapport au châssis. Cette nacelle comprend également un mécanisme de pesée tel que mentionné ci-dessus reliant la plateforme et le mât.

L'invention sera mieux comprise et d'autres avantages de celle-ci apparaîtront plus clairement à la lumière de la description qui va suivre de deux modes de réalisation, d'un mécanisme de pesée et d'une nacelle élévatrice conformes à son principe, donnée uniquement à titre d'exemple et faite en se référant aux dessins annexés dans lesquels :
- la figure 1 est une vue de principe en élévation d'une nacelle conforme à un premier mode de réalisation de l'invention ;
- la figue 2 est une vue en perspective éclatée d'un mécanisme de pesée faisant le lien entre la plateforme et le bras de la nacelle de la figure 1 ;
- la figure 3 est une vue partielle, à plus grande échelle et avec une vue fantôme d'un étrier, du détail III de la figure 2 ;
- la figure 4 est une vue de côté d'un mécanisme de pesée en configuration montée, suivant un deuxième mode de réalisation de l'invention.

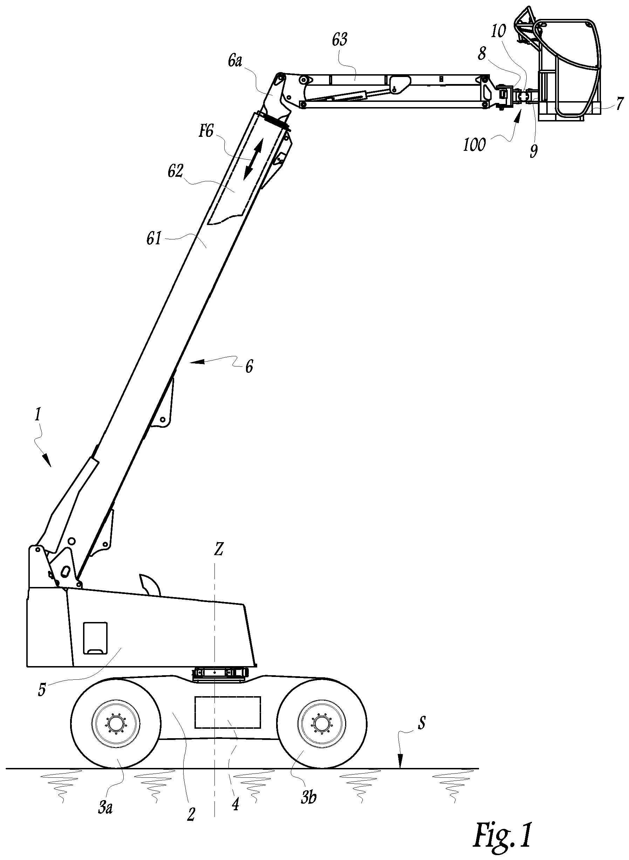

La nacelle 1 représentée à la figure 1 est équipée d'un châssis 2 reposant sur la surface du sol S au moyen de quatre roues dont deux sont visibles sur cette figure avec les références 3a et 3b. Le châssis 2 porte un ensemble de motorisation 4 et une tourelle 5 qui peut tourner autour d'un axe Z perpendiculaire à la surface du sol S. la tourelle 5 porte elle-même un mât 6 comprenant un fût 61 ainsi qu'une partie 62 télescopique par rapport au fût 61. La possibilité d'extension du mât 6 est représentée par la double flèche F6 à la figure 1. En variante, le mât pourrait avoir plus d'une partie télescopique.

En partie supérieure 6a du mât 6, un bras pendulaire 63 faisant partie du mât 6 est articulé et supporte, par l'intermédiaire d'un mécanisme de pesée 100, une plateforme 7 sur laquelle peuvent se tenir un ou plusieurs opérateurs ou, dans une variante, une ou plusieurs charges.

Le mécanisme de pesée 100 comprend deux supports 8 et 9 et une cellule de mesure d'efforts 10.

Le support 8 comprend un étrier 82 monté par des boulons 84 sur un arbre 64 fixé à l'extrémité du bras pendulaire 63 opposé à la partie 62. L'étrier 82 est formé d'un fond plan 822 et de deux ailes 824 et 826 perpendiculaires au fond 822 et entre lesquelles est reçu l'arbre 64. A l'opposé des ailes 824 et 826, le fond 822 porte deux plaques 20 et 30 qui sont soudées sur le fond 822, parallèles et qui définissent entres elles et avec le fond 822 un premier volume V1 dans lequel on peut venir insérer une partie de la cellule de mesure d'efforts 10, en configuration montée du mécanisme 100.

Le support 9 comprend un panneau 92 soudé sur le plancher 72 et sur la rambarde 74 de la plateforme 7. Deux plaques 40 et 50 sont soudées sur la face du panneau 92 opposée à la rambarde. Ces plaques 40 et 50 sont parallèles et définissent entre elles et avec le panneau 92 un deuxième volume V2 dans lequel on peut venir insérer une partie de la cellule de mesure d'efforts 10, en configuration montée du mécanisme.

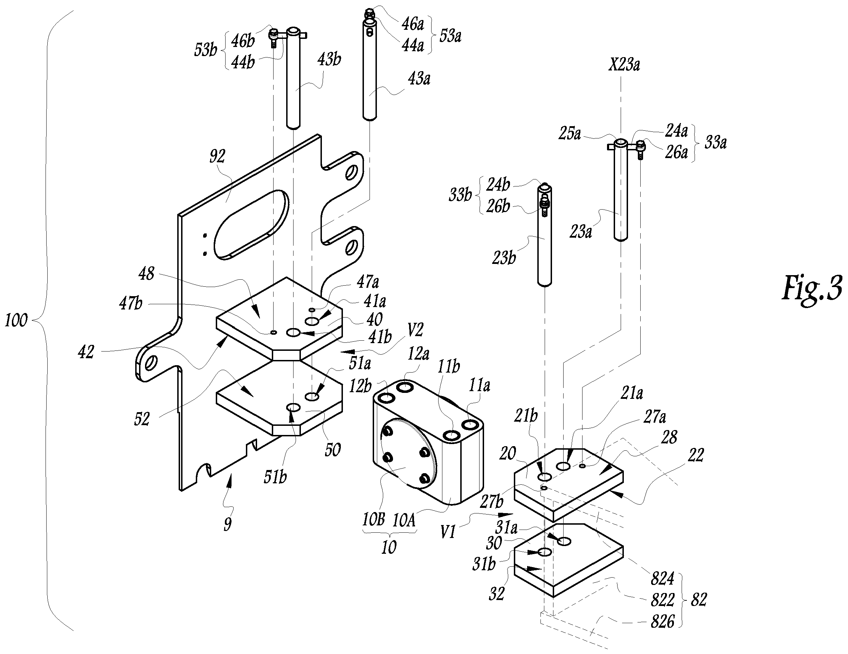

Lorsque la cellule de mesure d'efforts 10 est partiellement engagée dans les volumes V1 et V2, elle vient en appui contre les plaques 20, 30, 40 et 50. Ainsi, les surfaces 22, 32, 42 et 52 des plaques 20, 30, 40 et 50, tournées vers la plaque adjacente et qui définissent respectivement les volumes V1 et V2, constituent des surfaces d'appui pour la cellule 10. Les surfaces 22 et 42 ne sont pas directement visibles à la figure 3, mais repérées par leurs arêtes.

La cellule de mesure d'efforts 10 comprend un boitier 10A et un capteur d'effort 10B, de type jauge de déformation. Le fonctionnement des capteurs à jauge de déformation est fondé sur la variation de résistance électrique de la jauge, proportionnellement à sa déformation. D'autres types de capteurs sont envisageables.

Chaque plaque 20, 30, 40 ou 50 est pourvue de deux orifices traversants. On note 21 a et 21 b les deux orifices de la plaque 20, 31 a et 31 b les deux orifices de la plaque 30. Les orifices 21 b et 31 b, comme les orifices 21a et 31 a, sont verticalement alignés. De plus, on note 41 a et 41 b les deux orifices de la plaque 40 et 51 a et 51 b les deux orifices de la plaque 50. Les orifices 41 b et 51 b, comme les orifices 41a et 51 a, sont verticalement alignés.

Par ailleurs, le boitier 10A de la cellule de mesure d'efforts 10 est pourvu de deux premiers logements traversants 11a, 11 b et de deux deuxièmes logements traversants 12a, 12b. Chacun de ces logements est situé dans un des quatre coins de la cellule de mesure d'efforts 10, en vue de dessus.

En configuration montée du mécanisme 100 les logements traversants 11 a et 11 b sont respectivement alignés avec les orifices 21 a, 31a et avec les orifices 21 b, 31 b. D'autre part, les logements traversants 12a et 12b sont respectivement alignés avec les orifices 41 a, 51a et 41 b, 51 b. De plus, en configuration montée du mécanisme, un premier pion 23a est inséré dans le logement 11a et dans les orifices 21 a et 31 a, alors qu'un autre pion 23b est inséré dans le logement 11 b et dans les orifices 21 b et 31 b. De même, des pions 43a et 43b sont respectivement insérés dans le logement 12a et dans les orifices 41 a et 51 a, d'une part, dans le logement 12b et dans les orifices 41 b et 51 b, d'autre part. Les pions 23a, 23b, 43a et 43b sont identiques.

Le pion 23a s'étend selon un axe X23a qui est aligné avec des axes centraux du logement 11 a et des orifices 21 a et 31 a, en configuration montée. Une patte 24a s'étend radialement à l'axe X23a et traverse une extrémité 25a du pion 23a. La patte 24a porte une vis 26a qui traverse une ouverture terminale de la patte 24a. Ainsi, le pion 23a est cinématiquement lié à la vis 26a. De même, les pions 23b, 43a et 43b sont cinématiquement liés à des vis 26b, 46a et 46b, par des pattes 24b, 44a et 44b.

Chaque pion 23a, 23b, 43a et 43b est donc respectivement équipé d'un organe d'arrêt 33a, 33b, 53a et 53b constitué d'une patte 24a, 24b, 44a ou 44b et d'une vis 26a, 26b, 46a ou 46b.

Deux taraudages notés 27a et 27b sont ménagés dans la plaque 20 et débouchent sur la surface 28 de cette plaque opposée à sa surface 22 et à la plaque 30. Ces taraudages sont situés respectivement au voisinage des orifices 21 a et 21 b. De plus deux taraudages 47a et 47b sont ménagés dans la plaque 40. Ils débouchent sur sa surface 48 opposée à la surface 42 et sont respectivement situés au voisinage des orifices 41a et 41 b. Ces taraudages permettent de recevoir les vis 26a, 26b, 46a et 46b qui appartiennent aux organes 33a, 33b, 53a et 53b d'arrêt des pions par rapport aux plaques 20, 30, 40 et 50.

En variante, le mécanisme de pesée ne comprend qu'une plaque de chaque coté du mécanisme de pesée, c'est-à-dire, par exemple uniquement la plaque 30 et la plaque 50, ou uniquement la plaque 20 et la plaque 50

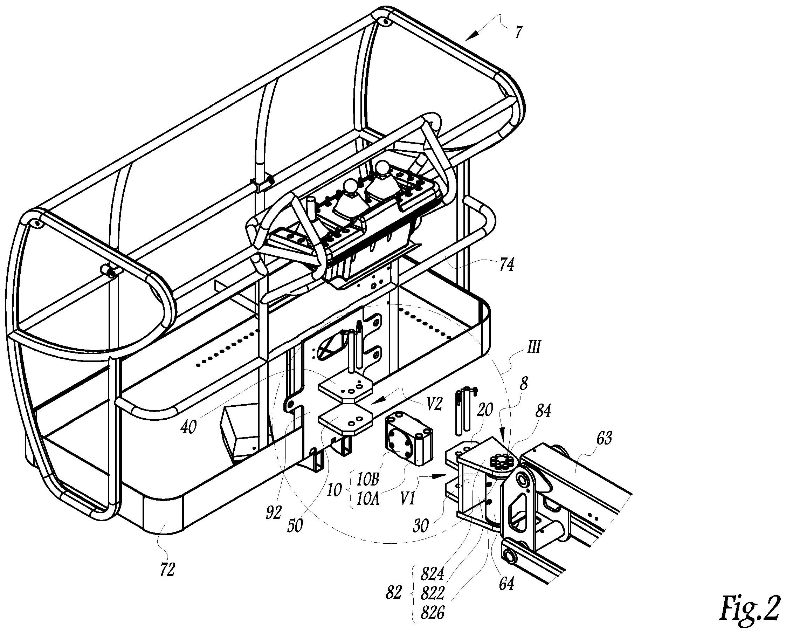

Une autre possibilité est d'avoir un mécanisme similaire à celui des figures 2 et 3 pour lequel la cellule de mesure 10 n'est pourvue que de deux logements traversants 11a, 12a. Ceci implique de n'utiliser que deux pions, un seul orifice traversant par plaque et un seul taraudage par plaque.

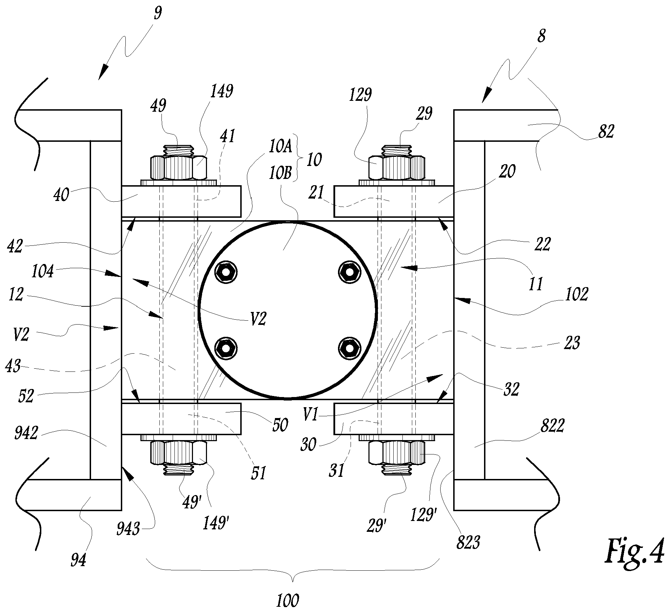

La figure 4 représente un deuxième mode de réalisation dans lequel, le mécanisme de pesée 100 est placé entre le mât 6 et la plateforme 7 au moyen de deux supports 8 et 9 comprenant chacun un étrier 82 ou 94. Dans ce qui suit, on décrit uniquement ce qui distingue ce mode de réalisation du précédent.

Le mécanisme de pesée 100 n'est pourvu que de deux pions 23 et 43. Ceci implique que chaque plaque 20, 30, 40 et 50 est pourvue d'un seul orifice traversant 21, 31, 41 ou 51, que le boîtier 10A de la cellule 10 ne comprend que deux logements traversants 11 et 12 à l'opposé l'un de l'autre et que le premier pion 23 est inséré dans le premier logement 11 et les orifices 21, 31 des plaques 20 et 30, alors que le deuxième pion 43 est inséré dans le deuxième logement 12 et les orifices 41, 51 des plaques 40 et 50. Par ailleurs, chaque pion est pourvu de deux filetages terminaux notés 29 et 29' pour le premier pion 23 et 49 et 49' pour le deuxième pion 43, sur chacun desquels est serré un écrou respectivement 129, 129', 149 ou 149' à l'opposé de la cellule par rapport aux plaques.

Pour bloquer la rotation du boîtier 10A autour des pions 23 et 43, ce boîtier est en appui plan contre les étriers 82 et 94. Plus précisément, une première face plane d'extrémité 102 du boîtier 10A est en appui contre une face plane 823 du fond 822 de l'étrier 82, entre les plaques 20 et 30. De même une face plane d'extrémité 104 du boîtier 10A est en appui contre une face plane 943 du fond 942 de l'étrier 94, entre les plaques 40 et 50.

Dans une variante on pourrait n'avoir qu'un seul filetage sur une seule extrémité de chaque pion 23 ou 43 sur chacun desquels un écrou serait fixé, alors qu'une tête serait prévu à l'autre extrémité.

On note que, quel que soit le mode de réalisation, en configuration nominale d'utilisation du mécanisme 100, chaque pion s'étend selon une direction parallèle au poids d'une masse supportée par la plateforme 7.

En variante la plateforme 7, peut être reliée à la partie 62 directement par l'intermédiaire du mécanisme de pesée et sans que la nacelle soit équipée d'un bras pendulaire 63.

Les caractéristiques des modes de réalisation et variantes envisagés ci-dessus peuvent être combinées entre elles.

En variante, en configuration nominale d'utilisation du mécanisme (100), chaque pion 23a, 23b, 43a, 43b ou 23 et 43 peut s'étendre selon une direction perpendiculaire au poids d'une masse supportée par la plateforme.

## Revendications

1. Mécanisme de pesée (100) pour une nacelle élévatrice (1) qui comprend un mât (6) et une plateforme (7) de support de charges ou de personnes, ce mécanisme de pesée comprenant
- une cellule de mesure d'efforts (10) intercalée entre le mât (6) et la plateforme (7),
- au moins une première plaque (30) solidaire d'un premier support (8) supporté par le mât (6) et définissant une première surface (32) d'appui de la cellule, cette plaque étant pourvue d'au moins un premier orifice (31 a ; 31) traversant,
- au moins une deuxième plaque (50) solidaire d'un deuxième support (9) supportant la plateforme (7) et définissant une deuxième surface (52) d'appui de la cellule, cette plaque étant pourvue d'au moins un deuxième orifice (51a ; 51) traversant,
- au moins un premier pion (23a ; 23),
- au moins un deuxième pion (43a ; 43),
**caractérisé en ce que** la cellule est pourvue d'au moins un premier logement (11a ; 11) traversant aligné avec le premier orifice (31 a ; 31) et d'au moins un deuxième logement (12a ; 12) traversant aligné avec le deuxième orifice (51 a ; 51) en configuration montée du mécanisme (100), **en ce que**, en configuration montée du mécanisme, le premier pion (23a ; 23) est inséré dans le premier logement (11a ; 11) et dans le premier orifice (31 a ; 31) et le deuxième pion (43a ; 43) est inséré dans le deuxième logement (12a ; 12) et dans le deuxième orifice (51a ; 51), et **en ce qu'**en configuration nominale d'utilisation du mécanisme (100) chaque pion (23a, 23b, 43a, 43b ; 23, 43) s'étend selon une direction parallèle au poids d'une masse supportée par la plateforme (7).

2. Mécanisme de pesée selon la revendication 1, **caractérisé,**
- **en ce que** la première plaque (30) et la deuxième plaque (50) sont pourvues chacune de deux orifices traversant (31 a, 31 b, 51 a, 51 b),
- **en ce que** le mécanisme comprend un troisième pion (23b) et un quatrième pion (43b),
- **en ce que** la cellule est pourvue de deux premiers logements (11 a, 11b) traversants respectivement alignés avec les deux orifices (31 a, 31 b) de la première plaque et de deux deuxièmes logements (12a, 12b) traversants respectivement alignés avec les deux orifices (51 a, 51 b) de la deuxième plaque, en configuration montée du mécanisme, et
- **en ce que** les premier et troisième pions (23a, 23b) sont insérés dans les deux premiers logements (11 a, 11 b) de la cellule et dans les deux orifices (31 a, 31 b) de la première plaque et les deuxième et quatrième pions (43a, 43b) sont insérés dans les deux deuxièmes logements (12a, 12b) de la cellule et dans les deux orifices (51 a, 51 b) de la deuxième plaque, en configuration montée du mécanisme.

3. Mécanisme de pesée selon l'une des revendications précédentes, **caractérisé,**
- **en ce que** le mécanisme 100 comprend :
- une troisième plaque (20) solidaire du premier support (8) et définissant une troisième surface (22) d'appui de la cellule (10), cette plaque étant parallèle à la première plaque (30) et définissant, avec la première plaque et le premier support (8) un premier volume (V1) dans lequel une partie de la cellule peut être insérée, cette troisième plaque étant pourvue d'au moins un troisième orifice (21a ; 21) traversant,
- une quatrième plaque (40) solidaire du deuxième support (9) et définissant une quatrième surface d'appui (42) de la cellule, cette plaque étant parallèle à la deuxième plaque (50) et définissant, avec la deuxième plaque et le deuxième support (9), un deuxième volume (V2) dans lequel peut être insérée une partie de la cellule, cette quatrième plaque étant pourvue d'au moins un quatrième orifice (41a ; 41) traversant,
- **en ce que** le premier logement (11 a) traversant est aligné avec le troisième orifice (21a ; 21) et le deuxième logement (12a) traversant est aligné avec le quatrième orifice (41a ; 41), en configuration montée du mécanisme et
- **en ce que** le premier pion (23a) est inséré dans le troisième orifice (21a ; 21) et le deuxième pion (43a) est inséré dans le quatrième orifice (41a; 41), en configuration montée du mécanisme.

4. Mécanisme de pesée selon les revendications 2 et 3, **caractérisé,**
- **en ce que** la troisième plaque (20) et la quatrième plaque (40) sont chacune pourvues de deux orifices traversants (21a, 21b ; 41a, 41b),
- **en ce que** les deux premiers logements (11 a, 11 b) de la cellule sont alignés avec les deux orifices (21 a, 21 b) de la troisième plaque et les deux deuxièmes logements (12a, 12b) de la cellule sont alignés avec les deux orifices (41 a, 41 b) de la quatrième plaque, en configuration montée du mécanisme et
- **en ce que**, en configuration montée du mécanisme, les premier et troisième pions (23a, 23b) sont insérés dans les deux orifices (21 a, 21 b) de la troisième plaque et les deuxième et quatrième pions (43a, 43b) sont insérés dans les deux orifices (41 a, 41 b) de la quatrième plaque.

5. Mécanisme de pesée selon l'une des revendications précédentes, **caractérisé en ce qu'**un pion (23a, 23b, 43a, 43b) est immobilisé par rapport à une plaque dont il traverse l'orifice au moyen d'une liaison vissée (26a / 27a, 26b / 27b, 46a / 47a, 46b / 47b).

6. Mécanisme de pesée selon l'une des revendications précédentes, **caractérisé en ce qu'**un taraudage (27a, 27b, 47a, 47b) est ménagé dans une plaque (20, 40) au voisinage de son orifice traversant (21 a, 21 b, 41 a, 41b) et le pion (23a, 23b, 43a, 43b) est équipé d'un organe (33a, 33b, 53a, 53b) d'arrêt en translation axiale, apte à être vissé dans le taraudage de la plaque.

7. Mécanisme de pesée selon la revendication 6, **caractérisé en ce que** l'organe d'arrêt (33a, 33b, 53a, 53b) comprend une vis (26a, 26b, 46a, 46b) montée sur une patte (24a, 24b, 44a, 44b) solidaire du pion et qui s'étend radialement par rapport à un axe central et longitudinal (X23a) du pion (23a).

8. Mécanisme de pesée selon l'une des revendications 1 à 4, **caractérisé en ce qu'**un pion (23, 43) est pourvu d'au moins un filetage terminal (29, 29', 49, 49') sur lequel est serré un écrou (129, 129', 149, 149') à l'opposé de la cellule par rapport à la plaque (20, 30, 40, 50) adjacente, en configuration montée du mécanisme.

9. Mécanisme de pesée selon l'une des revendications précédentes, **caractérisé en ce que** la cellule de mesure d'efforts (10) comprend un capteur (10B) à jauge de déformation.

10. Nacelle élévatrice comprenant un châssis (2) équipé de moyens (3a, 3b, 4) de déplacement sur la surface du sol (S), une plateforme (7) de support de charges ou de personnes, un mât (6) et des moyens d'élévation (61, 62, 63) de la plateforme par rapport au châssis, **caractérisée en ce qu'**elle comprend un mécanisme de pesée (100) selon l'une des revendications précédentes reliant la plateforme (7) et le mât (6).

## Patentansprüche

1. Wägevorrichtung (100) für eine Hubarbeitsbühne (1), die einen Mast (6) und eine Plattform (7) zum Abstützen von Lasten oder Personen umfasst, wobei diese Wägevorrichtung umfasst
- eine Kraftmesszelle (10), die zwischen dem Mast (6) und der Plattform (7) angeordnet ist,
- mindestens eine erste Platte (30), die mit einer ersten von dem Mast (6) getragenen Stütze (8) verbunden ist und die eine erste Fläche (32) für die Auflage der Zelle begrenzt, wobei diese Platte mit mindestens einer ersten Durchgangsöffnung (31a; 31) versehen ist,
- mindestens eine zweite Platte (50), die mit einer zweiten die Plattform (7) abstützende Stütze (9) verbunden ist und die eine zweite Fläche (52) zur Auflage der Zelle begrenzt, wobei diese Platte mit mindestens einer zweiten Durchgangsöffnung (51a; 51) versehen ist,
- mindestens einen ersten Stift (23a; 23),
- mindestens einen zweiten Stift (43a; 43),
**dadurch gekennzeichnet, dass** die Zelle mit mindestens einer ersten durchgehenden Aufnahme (11a; 11), die in der montierten Stellung der Vorrichtung (100) mit der ersten Öffnung (31a; 31) ausgerichtet ist, und mindestens eine zweite durchgehende Aufnahme, die in der montierten Stellung der Vorrichtung (100) mit der zweiten Öffnung (51a; 51) ausgerichtet ist, versehen ist, dass in der montierten Stellung der Vorrichtung der erste Stift (23a; 23) in die erste Aufnahme (11a; 11) und in die erste Öffnung (31a; 31) eingefügt ist und der zweite Stift (43a; 43) in die zweite Aufnahme (12a; 12) und die zweite Öffnung (51a; 51) eingefügt ist, und dass in der Sollstellung der Benutzung der Vorrichtung (100) jeder Stift (23a, 23b, 43a, 43b; 23, 43) sich gemäß einer Richtung parallel zum Gewicht einer von der Plattform (7) getragenen Masse erstreckt.

2. Wägevorrichtung nach Anspruch 1, **dadurch gekennzeichnet,**
- **dass** die erste Platte (30) und die zweite Platte (50) jeweils mit zwei Durchgangsöffnungen (31a, 31b, 51a, 51b) versehen sind,
- **dass** die Vorrichtung einen dritten Stift (23b) und einen vierten Stift (43b) umfasst,
- **dass** die Zelle mit zwei ersten durchgehenden Aufnahmen (11a, 11b), die in der montierten Stellung der Vorrichtung (100) jeweils mit zwei Öffnungen (31a, 31b) der ersten Platte ausgerichtet sind, und zwei zweiten durchgehenden Aufnahmen (12a, 12b), die in der montierten Stellung der Vorrichtung (100) jeweils mit den zweiten Öffnungen (51a, 51b) der zweiten Platte ausgerichtet sind, versehen ist, und
- **dass** in der montierten Stellung der Vorrichtung der erste und dritte Stift (23a, 23b) in die zwei ersten Aufnahmen (11a, 11b) der Zelle und in die zwei Öffnungen (31a, 31b) der ersten Platte eingefügt sind und der zweite und vierte Stift (43a, 43b) in die zwei zweiten Aufnahmen (12a, 12b) der Zelle und in die zwei Öffnungen (51a, 51b) der zweiten Platte eingefügt sind.

3. Wägevorrichtung nach einem der vorhergehenden Ansprüche, **dadurch gekennzeichnet,**
- **dass** die Vorrichtung (100) umfasst:
- eine dritte mit der ersten Stütze (8) verbundene Platte (20), die eine dritte Fläche (22) zur Auflage der Zelle (10) begrenzt, wobei diese Platte parallel zur ersten Platte (30) liegt und mit der ersten Platte und der ersten Stütze (8) ein erstes Volumen (V1) begrenzt, in das ein Teil der Zelle eingesetzt werden kann, wobei diese dritte Platte mit mindestens einer dritten Durchgangsöffnung (21a; 21) versehen ist,
- eine vierte mit der zweiten Stütze (9) verbundene Platte (40), die eine vierte Fläche (42) zur Auflage der Zelle begrenzt, wobei diese Platte parallel zur zweiten Platte (50) liegt und mit der zweiten Platte und der zweiten Stütze (9) ein zweites Volumen (V2) begrenzt, in das ein Teil der Zelle eingefügt werden kann, wobei diese vierte Platte mit mindestens einer vierten Durchgangsöffnung (41a; 41) versehen ist,
- **dass** in der montierten Stellung der Vorrichtung die erste durchgehende Aufnahme (11a) mit der dritten Öffnung (21a; 21) ausgerichtet ist und die zweite durchgehende Aufnahme (12a) mit der vierten Öffnung (41a; 41) ausgerichtet ist, und
- **dass** in der montierten Stellung der Vorrichtung der erste Stift (23a) in die dritte Öffnung (21A, 21) eingefügt ist und der zweite Stift (43a) in die vierte Öffnung (41a; 41) eingefügt ist.

4. Wägevorrichtung nach den Ansprüchen 2 und 3, **dadurch gekennzeichnet,**
- **dass** die dritte Platte 820) und die vierte Platte (40) jeweils mit zwei Durchgangsöffnungen (21a, 21b; 41a, 41b) versehen sind,
- **dass** in der montierten Stellung der Vorrichtung die zwei ersten Aufnahmen (11a, 11b) der Zelle mit den zwei Öffnungen (21a, 21b) der dritten Platte ausgerichtet sind und die zwei zweiten Aufnahmen (12a, 12b) der Zelle mit den zwei Öffnungen (41a, 41b) der vierten Platte ausgerichtet sind, und
- **dass** in der montierten Stellung der Vorrichtung der erste und dritte Stift (23a, 23b) in die zwei Öffnungen (21a, 21b) der dritten Platte eingefügt sind und der zweite und vierte Stift (43a, 43b) in die zwei Öffnungen (41a, 41b) der vierten Platte eingefügt sind.

5. Wägevorrichtung nach einem der vorhergehenden Ansprüche, **dadurch gekennzeichnet, dass** ein Stift (23a, 23b, 43a, 43b) in Bezug auf eine Platte, deren Öffnung er durchquert, mittels einer Schraubverbindung (26a/27a, 26b/27b, 46a/47a, 46b/47b) festgelegt ist.

6. Wägevorrichtung nach einem der vorhergehenden Ansprüche, **dadurch gekennzeichnet, dass** ein Innengewinde (27a, 27b, 47a, 47b) in eine Platte (20, 40) in der Nähe ihrer Öffnung (21a, 21b, 41a, 41b) eingearbeitet ist und der Stift (23a, 21b, 41a, 41b) mit einem Halteelement (33a, 33b, 53a, 53b) hinsichtlich einer axialen Translation ausgerüstet ist, das geeignet ist, in das Innengewinde der Platte eingeschraubt zu werden.

7. Wägevorrichtung nach Anspruch 6, **dadurch gekennzeichnet, dass** das Halteelement (33a, 33b, 53a, 53b) eine Schraube (26a, 26b, 46a, 46b) umfasst, die an einem mit dem Stift verbunden Ansatz (24a, 24b, 44a, 44b) montiert ist und die sich radial in Bezug auf eine Mittelachse und Längsachse (X23a) des Stifts (23a) erstreckt.

8. Wägevorrichtung nach einem der Ansprüche 1 bis 4, **dadurch gekennzeichnet, dass** ein Stift (23, 43) mit mindestens einem Endgewinde (29, 29', 49, 49') versehen ist, auf das in der montierten Stellung der Vorrichtung in Bezug auf die benachbarte Platte (20, 30, 40, 50) gegenüberliegend zur Zelle eine Mutter (129, 129', 149, 149') geschraubt ist.

9. Wägevorrichtung nach einem der vorhergehenden Ansprüche, **dadurch gekennzeichnet, dass** die Kraftmesszelle (10) einen Dehnungsmessstreifen (10B) umfasst.

10. Hubarbeitsbühne, ein Chassis (2) umfassend, das mit Mitteln (3a, 3b, 4) zum Bewegen auf der Bodenoberfläche (S), einer Plattform (7) zum Abstützen von Lasten und Personen, einem Mast (6) und Mitteln (61, 62, 63) zum Anheben der Plattform in Bezug auf das Chassis ausgerüstet ist, **dadurch gekennzeichnet, dass** sie eine Wägevorrichtung (100) nach einem der vorhergehenden Ansprüche umfasst, die die Plattform (7) mit dem Mast (6) verbindet.

## Claims

1. A weighing mechanism (100) for an aerial lift (1) that comprises a mast (6) and a platform (7) for supporting loads or people, this weighing mechanism comprising
- a force measuring cell (10) inserted between the mast (6) and the platform (7),
- at least one first plate (30) secured to a first support (8) supported by the mast (6) and defining a first bearing surface (32) of the cell, that plate being provided with at least one first through-orifice (31 a, 31),
- at least one second plate (50) secured to a second support (9) supporting the platform (7) and defining a second bearing surface (52) of the cell, that plate being provided with at least one second through-orifice (51 a, 51),
- at least one first slug (23a; 23),
- at least one second slug (43a; 43),
**characterized in that** the cell is provided with at least one first through-housing (11a; 11) aligned with the first orifice (31 a; 31), and at least one second through-housing (12a; 12) aligned with the second orifice (51 a; 51), in an assembled configuration of the mechanism (100), **in that**, in the assembled configuration of the mechanism, the first slug (23a; 23) is inserted into the first housing (11 a; 11) and in the first orifice (31 a; 31), and the second slug (43a; 43) is inserted in the second housing (12a; 12) and the second orifice (51 a; 51), and **in that** in a nominal usage configuration of the mechanism (100), each slug (23a, 23b, 43a, 43b; 23, 43) extends in a direction parallel to the weight of a mass supported by the platform (7).

2. The weighing mechanism according to claim 1, **characterized**
- **in that** the first plate (30) and the second plate (50) are each provided with two through-orifices (31 a, 31 b, 51 a, 51 b),
- **in that** the mechanism comprises a third slug (23b) and a fourth slug (43b),
- **in that** the cell is provided with two first through-housings (11 a, 11 b) respectively aligned with the two orifices (31a, 31b) of the first plate and two second through-housings (12a, 12b) respectively aligned with the two orifices (51 a, 51 b) of the second plate, in the assembled configuration of the mechanism, and
- **in that** the first and third slugs (23a, 23b) are inserted in the two first housings (11 a, 11 b) of the cell and in the two orifices (31 a, 31b) of the first plate and the second and fourth slugs (43a, 43b) are inserted in the two second housings (12a, 12b) of the cell and in the two orifices (51 a, 51 b) of the second plate, in the assembled configuration of the mechanism.

3. The weighing mechanism according to one of the preceding claims, **characterized**
- **in that** the mechanism (100) comprises:
- a third plate (20) secured to the first support (8) and defining a third bearing surface (22) of the cell (10), said plate being parallel to the first plate (30) and defining, with the first plate and the first support (8), a first volume (V1) in which a part of the cell can be inserted, that third plate being provided with at least one third through-orifice (21 a; 21),
- a fourth plate (40) secured to the second support (9) and defining a fourth bearing surface (42) of the cell, said plate being parallel to the second plate (50) and defining, with the second plate and the second support (9), a second volume (V2) in which a part of the cell can be inserted, that fourth plate being provided with at least one fourth through-orifice (41 a; 41),
- **in that** the first through-housing (11 a) is aligned with the third orifice (21 a; 21) and the second through-housing (12a) is aligned with the fourth orifice (41 a; 41), in the assembled configuration of the mechanism, and
- **in that** the first slug (23a) is inserted in the third orifice (21 a; 21) and the second slug (43a) is inserted in the fourth orifice (41 a; 41), in the assembled configuration of the mechanism.

4. The weighing mechanism according to claims 2 and 3, **characterized**
- **in that** the third plate (20) and the fourth plate (40) are each provided with two through-orifices (21 a, 21 b; 41 a, 41 b),
- **in that** the two first housings (11 a, 11 b) of the cell are aligned with the two orifices (21 a, 21 b) of the third plate and the two second housings (12a, 12b) of the cell are aligned with the two orifices (41 a, 41 b) of the fourth plate, in the assembled configuration of the mechanism, and
- **in that**, in the assembled configuration of the mechanism, the first and third slugs (23a, 23b) are inserted in the two orifices (21 a, 21 b) of the third plate and the second and fourth slugs (43a, 43b) are inserted in the two orifices (41 a, 41 b) of the fourth plate.

5. The weighing mechanism according to one of the preceding claims, **characterized in that** a slug (23a, 23b, 43a, 43b) is immobilized relative to a plate whose it passes through the orifice using a screwed connection (26a / 27a, 26b / 27b, 46a / 47a, 46b / 47b).

6. The weighing mechanism according to one of the preceding claims, **characterized in that** an inner thread (27a, 27b, 47a, 47b) is arranged in a plate (20, 40) near its through-orifice (21 a, 21 b, 41 a, 41 b) and the slug (23a, 23b, 43a, 43b) is equipped with a member (33a, 33b, 53a, 53b) for stopping axial translation, able to be screwed in the inner thread of the plate.

7. The weighing mechanism according to claim 6, **characterized in that** the stop member (33a, 33b, 53a, 53b) comprises a screw (26a, 26b, 46a, 46b) mounted on a tab (24a, 24b, 44a, 44b) secured to the slug and which extends radially relative to a central and longitudinal axis (X23a) of the slug (23a).

8. The weighing mechanism according to one of claims 1 to 4, **characterized in that** a slug (23, 43) is provided with at least one terminal thread (29, 29', 49, 49') on which a nut (129, 129', 149, 149') is tightened opposite to the cell relative to the adjacent plate (20, 30, 40, 50), in the mounted configuration of the mechanism.

9. The weighing mechanism according to one of the preceding claims, **characterized in that** the force measuring cell (10) comprises a strain gauge sensor (10B).

10. An aerial lift comprising a chassis (2) equipped with means (3a, 3b, 4) for moving on the surface of the ground (S), a platform (7) for supporting loads or people, a mast (6) and means (61, 62, 63) for elevating the platform relative to the chassis, **characterized in that** it comprises a weighing mechanism (100) according to one of the preceding claims connecting the platform (7) and the mast (6).
